# EUROPEAN PATENT APPLICATION

(11) **EP 4 611 224 A1**
(43) Date of publication of application: **03.09.2025**
(21) Application number: 25160027.6
(22) Date of filing: 25.02.2025
(51) Int. Cl.: H02K 1/32, H02K 5/20, H02K 9/19

(54) **LIQUID COOLED MOTOR ASSEMBLY**

(30) Priority: 27.02.2024 US 202463558321 P; 05.02.2025 US 202519046182
(71) Applicant: Ingersoll-Rand Industrial U.S., Inc., Davidson, NC 28036 (US)
(72) Inventor: CRUM, Daniel R., Davidson, 28036 (US)
(74) Representative: Murgitroyd & Company

(57) **Abstract**

A motor assembly (100) is provided comprising a housing (102) having a first housing end, a second housing end, and a motor cavity (121) defined between the first housing end and the second housing end. The housing (102) defines a motor housing channel (118) along an inner surface of the motor cavity (121). A stator (117) and a rotor (144) are disposed inside the housing (102), the stator having an exterior surface in contact with the motor housing channel (118). An axial channel (114) is disposed within the housing (102), the axial channel extending from the first housing end to the second housing end. The axial channel (114) is in fluid communication with the motor housing channel (118), and the axial channel and the motor housing channel are configured to circulate a liquid around an outside surface of the stator (117).

## Description

### BACKGROUND

Electric motors convert electrical energy into mechanical energy. Electric motors provide a linear or rotary force intended to actuate external mechanisms such as compressor air ends.

### SUMMARY

According to the present invention there is provided a motor assembly comprising:
a housing having a first housing end, a second housing end, and a motor cavity defined between the first housing end and the second housing end, the housing defining a motor housing channel along an inner surface of the motor cavity;
a stator and a rotor disposed inside the housing, the stator having an exterior surface in contact with the motor housing channel; and
an axial channel disposed within the housing, the axial channel extending from the first housing end to the second housing end;
wherein the axial channel is in fluid communication with the motor housing channel, and the axial channel and the motor housing channel are configured to circulate a liquid around an outside surface of the stator.

Preferably, the motor housing channel is a helical channel around the outside surface of the stator.

Preferably, the axial channel is in fluid communication with a first passage and a second passage, the first passage proximate to the first housing end and the second passage proximate to the second housing end, the first passage and the second passage configured to deliver the liquid to an inboard stator coil end and an outboard stator coil end, respectively.

The motor assembly may further comprise a first spray ring and a second spray ring coupled to respective outlets of the first passage and the second passage, the first and second spray rings having an annular oil distribution channel configured to receive the liquid from the first and second passages and spray the liquid around the inboard stator coil end and the outboard stator coil end, respectively.

Preferably, the rotor comprises a shaft bolt and a rotor shaft encasing the shaft bolt, the shaft bolt and the rotor shaft defining an annular clearance region along at least a portion of the shaft bolt and the rotor shaft, and the rotor shaft defining a rotor shaft channel along an outer surface of the rotor shaft.

Preferably, the rotor shaft channel is a helical channel extending along and around the outer surface of the rotor shaft.

Preferably, the second passage is in fluid communication with a centerline conduit, the centerline conduit partially extending along a rotor axis, the centerline conduit fluidly connecting the first passage with the rotor shaft channel through the annular clearance region.

Preferably, the rotor shaft includes a helical channel exit slot fluidly connecting the helical channel with an inner surface of the inboard stator coil end.

Preferably, the rotor shaft further includes a radially oriented orifice fluidly connecting the annular clearance region with an inner surface of the outboard stator coil end.

The motor assembly may further comprise a bearing assembly configured to support the rotor, wherein the second passage is in fluid communication with the bearing assembly.

Preferably, a fluid circulating within the motor is a coolant fluid configured to cool the stator and rotor. The coolant fluid may be a lubricant fluid configured to lubricate at least one bearing assembly of the motor assembly.

### DRAWINGS

The Detailed Description is described with reference to the accompanying figures. The use of the same reference numbers in different instances in the description and the figures may indicate similar or identical items.
FIG. 1 is an isometric view of a motor assembly in accordance with example embodiments of the present disclosure.
FIG. 2 is a cross-sectional view of an oil filter manifold assembly of the motor assembly shown in FIG. 1 along line 2-2, in accordance with example embodiments of the present disclosure.
FIG. 3 is a partial cross-sectional view of a motor bulkhead of the motor assembly shown in FIG. 1 along line 3-3, in accordance with example embodiments of the present disclosure.
FIG. 4 is a cross-sectional side view of the motor assembly shown in FIG. 1 along line 4-4, in accordance with example embodiments of the present disclosure.
FIG. 5 is a partial cross-sectional view of a spray ring shown in FIG. 4 showing an annular distribution channel and nozzle swirl chambers in accordance with example embodiments of the present disclosure.
FIG. 6 is a close-up of the cross-sectional view of the motor assembly shown in FIG. 1 along line 6-6, in accordance with example embodiments of the present disclosure.
FIG. 7 is an isometric front and rear view of a washer shown in FIG. 6 having a flow-through passage in accordance with example embodiments of the present disclosure.
FIG. 8 is an isometric view of a rotor shaft shown in FIG. 6 having a rotor shaft helical channel in accordance with example embodiments of the present disclosure.
FIG. 9 is a cross-sectional front view of a stator end shown in FIG. 1 along line 9-9 in accordance with example embodiments of the present disclosure.
FIG. 10 is an isometric top view of a motor assembly in accordance with example embodiments of the present disclosure.
FIG. 11 is a partial cross-sectional view of a motor bulkhead of the motor assembly shown in FIG. 10 along line 11-11, in accordance with example embodiments of the present disclosure.
FIG. 12 is a cross-sectional side view of the motor assembly shown in FIG. 10 along line 12-12, in accordance with example embodiments of the present disclosure.
FIG. 13 is a partial cross-sectional view of the motor assembly shown in FIG. 10 along line 13-13, in accordance with example embodiments of the present disclosure.

### DETAILED DESCRIPTION

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

### Overview

Electric motors used by compressor air ends, for example high-speed oil-free air ends, are typically cooled by circulating liquid around the exterior of a jacket that is assembled to outside diameter of the motor stator, for example, with an interference fit. The heat is removed from the motor by both conduction and convection: first by conduction through a series of elements (e.g., a stator stack, an interference contact region and a jacket wall, etc.), and then by convection into the fluid flowing around the jacket. The resistance to heat transfer through this path is relatively high and limits the amount of waste heat that may be extracted from the motor during operation. In some motor assemblies, the end coils of the stator may be encased in an epoxy that contains conductive materials. To remove heat from the end coils the heat transfer path from the end coils is, for example, by conduction through the epoxy composite material and the jacket sleeve and then by convection into the jacket fluid. Again, heat transfer is limited due to the higher resistance path. Since the majority of the waste heat generated in a stator originates in the end coils, increasing the heat flux from this region is beneficial.

In some motors, the motor rotor is constructed of permanent magnets (PM) which are retained on a steel core with a carbon fiber sleeve. No means currently exist to remove heat from the PM rotor, other than free convection from the rotating rotor. The rotor waste heat, while lower in magnitude than that created in the stator, if not effectively removed, can contribute to motor inefficiency. Additionally, in the case of a rotor, a hot running rotor can lead to magnet degradation. Due to the lower heat rejection rates from motor employing present cooling methods, motors having a PM rotor either operate at a lower efficiency rate, or are oversized to compensate for this lower efficiency, which is needlessly expensive.

Increasing the overall heat transfer from the motor assembly is important for motor performance. First, if a motor of a given size is better cooled, then its overall efficiency increases, and the compressor power requirement is reduced. Second, better motor cooling can allow a motor of a given horsepower to be designed with less material and still have the same efficiency as a larger motor with poorer cooling. A smaller motor is less expensive, which lowers the overall cost of a compressor package. It is also possible with improved motor cooling to get a combination of somewhat better efficiency in a somewhat smaller motor size, to improve both compressor package efficiency and cost.

Accordingly, the present disclosure is directed to a liquid cooled motor assembly having a cooling system configured to extract heat from the stator by circulating a liquid (e.g., coolant, water, oil, etc.) directly over the stator outside surfaces. By eliminating the stator sleeve and the epoxy system surrounding the end coils, the cooling liquid is in direct contact with the stator exterior surfaces, enhancing heat transfer away from the stator. Additionally, by spraying coolant onto stator end coils that are not encased in epoxy, the heat transfer away from the end coils is enhanced. The motor assembly may also direct coolant through passages between the motor rotor and the rotor shaft in order to extract heat from the rotor. Liquid cooling the rotor likewise extracts eddy current-generated waste heat, which is ignored in current cooling technologies. Increasing motor cooling allows the motor to operate at a lower temperature, which increases motor efficiency. Thus, increased motor cooling allows an industrial system (e.g., compression system, etc.) to incorporate a smaller motor footprint.

The motor assembly can be used with any type of machine such as a compression device and should not be limited to the illustrative compressor system shown in any of the accompanying figures. The term "liquid" should be understood to include any liquid that can be used in the motor assembly as disclosed herein. It should be understood that oil may be used as a coolant and/or lubricant, but different liquids or mixtures of fluid constituents can be used and remain within the teaching of the present disclosure. Therefore, terms such as fluid, liquid, water, oil, coolant, lubricant, etc. can be used interchangeably in the present disclosure. For example, in some embodiments it is contemplated that oil, water, and/or glycol solutions and combinations thereof, etc. may be used as a circulating liquid.

The motor assembly and cooling system may employ a common cooling and lubricating oil or use two distinct fluids. The cooling system is configured to reject waste heat from the motor stator and rotor assembly to a greater degree than a motor that solely relies on a cooling jacket. Since the coolant stream runs in direct contact with the stator, resistance to heat transfer from the stator back is reduced. A coolant spray of the cooling system is directed at the stator end coils and facilitates efficient convective heat transfer from these surfaces, as opposed to conducting this heat through an epoxy encasement and then to a cooling jacket fluid.

The motor assembly may be coupled to a compression device with multi-stage compression or a compressor with single stage compression. For example, the motor assembly may be coupled to a rotary screw compressor. However, it is contemplated that other types of oil-free compressor systems and contact-cooled compressor systems may be used in example embodiments.

### Detailed Description of Example Embodiments

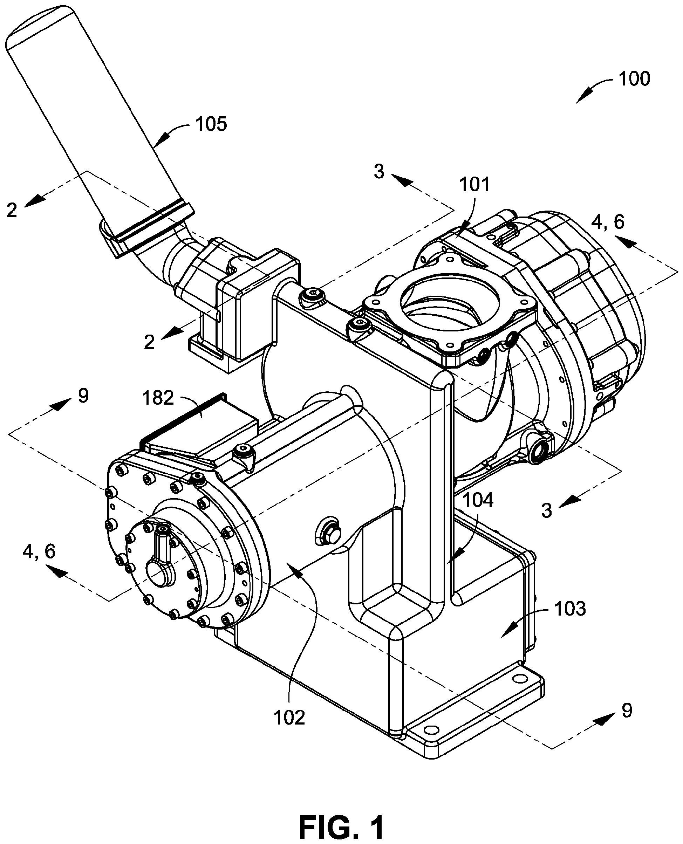

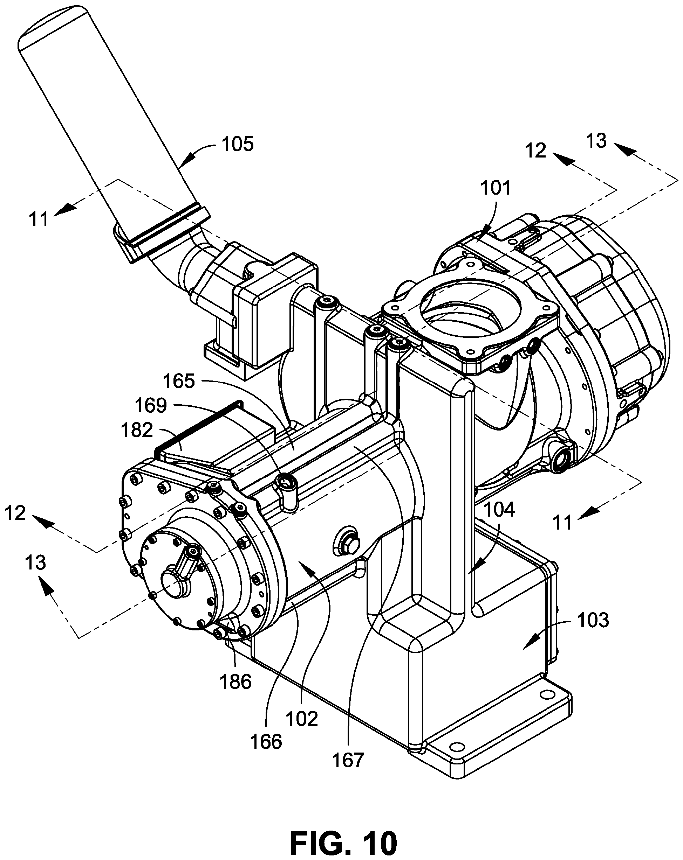

Referring generally to FIGS. 1 through 9, a liquid cooled motor assembly 100 having a bearing assembly 131 is described. In this embodiment, the liquid circulated as a coolant for the motor and is also a lubricating oil for the bearing assembly 131. In other embodiments, for example in FIGS. 10 through 13, the coolant used to cool the motor assembly 100 and the lubricant used to lubricate the bearing assembly 131 may be two separate fluids.

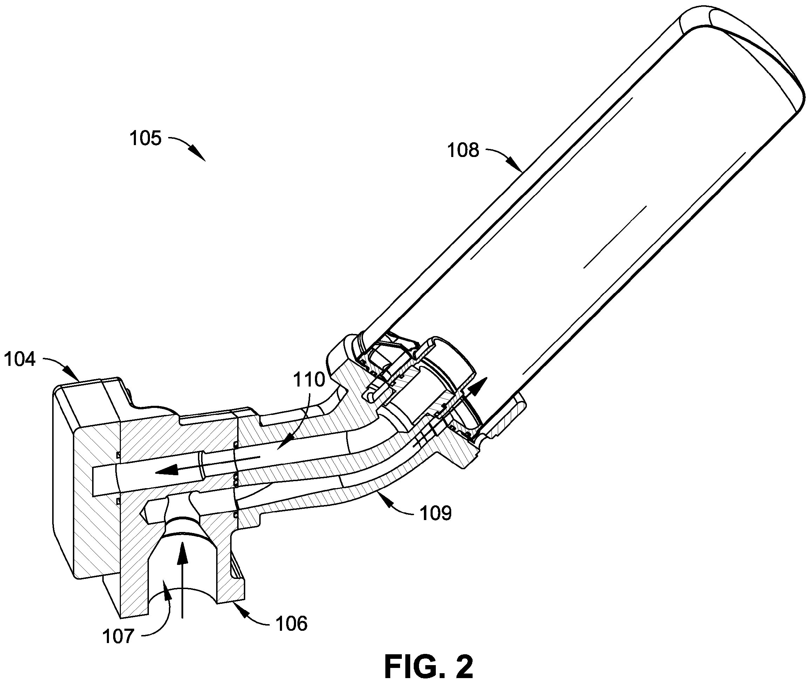

FIG. 1 shows a motor assembly 100 for a compressor air end 101 having a cooling system 164. The motor assembly 100 includes a bulkhead housing 104 having an oil sump region 103, a motor housing section 102 and an oil filter manifold assembly 105. The oil filter manifold assembly 105 is configured to filter impurities from an oil circulated through the motor assembly 100 prior to entering the bulkhead housing 104. Referring to FIG. 2, oil enters the oil filter manifold 106 through a lower inlet port 107 and flows into the filter 108 via a filter head 109. Clean oil flows to the bulkhead housing 104 through a manifold passage 110.

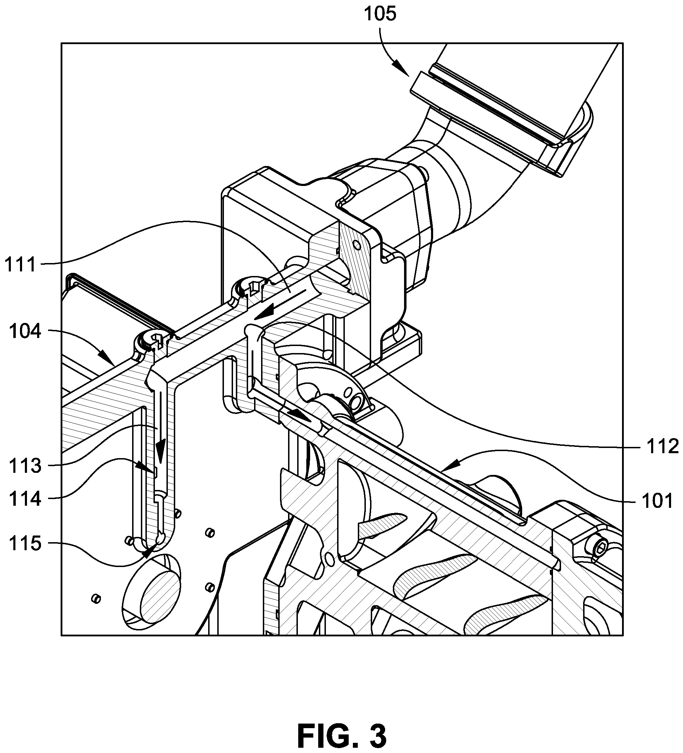

FIG. 3 is a vertical cross-section taken through the upper region of the bulkhead 104 showing oil flowing from the filter manifold 106 into a main bulkhead oil feed hole 111. From the main feed hole 111, oil is circulated into an airend conduit 112 that delivers the oil to the compressor air end 101 for lubricating a bearing assembly (not shown) of the compressor air end 101.

The motor assembly 100 further includes a stator 117 and a rotor 144 disposed in a motor cavity 121 within the motor housing 102. The motor assembly 100 is configured to drive a drive shaft 150 of the compressor air end 101. In other embodiments, the motor assembly 100 is configured to drive a drive shaft of another device including but not limited to fans, blowers, pumps, household appliances, power tools, vehicles, among others. From the main feed hole 111, the oil flows into a motor inlet conduit 113 defined in the motor housing 102, where the motor inlet conduit 113 is in fluid communication with an axial channel 114 and a first passage 115 towards the stator 117. In embodiments (not shown), a stator bolt, assembled to a motor housing boss, pins the stator 117 to the housing 102 preventing rotational and axial motion of the stator 117.

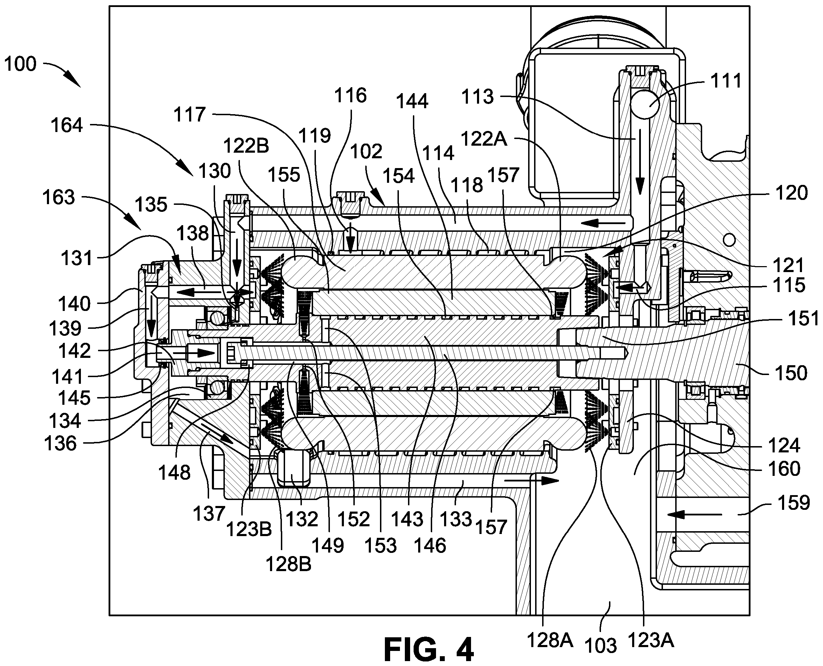

As shown in FIG. 4, the axial channel 114 is intersected by a radial hole 116.The radial hole 116 directs a portion of the oil into a motor housing helical channel 118 defined in the interior wall surface of the motor housing 102. In embodiments, the oil flowing through the motor housing helical channel 118 is in direct contact with the back of the stator 117 to remove waste heat. The motor housing helical channel 118 may be sealed on an outboard end of the stator with an O-ring 119. Oil flows along the full length of the stator 117 through the motor housing helical channel 118 and exits the channel 118 at a housing channel exit slot 120. The exiting oil flows over the inboard stator end coil 122a before draining to the oil sump 103 below. Although the motor housing channel 118 is described as a helical channel in the example embodiments shown, it should be understood that the motor housing channel 118 may be axial, radial, circumferential, helical, etc., or a combination thereof. In embodiments, the motor housing channel 118 is in direct contact with the outside surface of the stator 117.

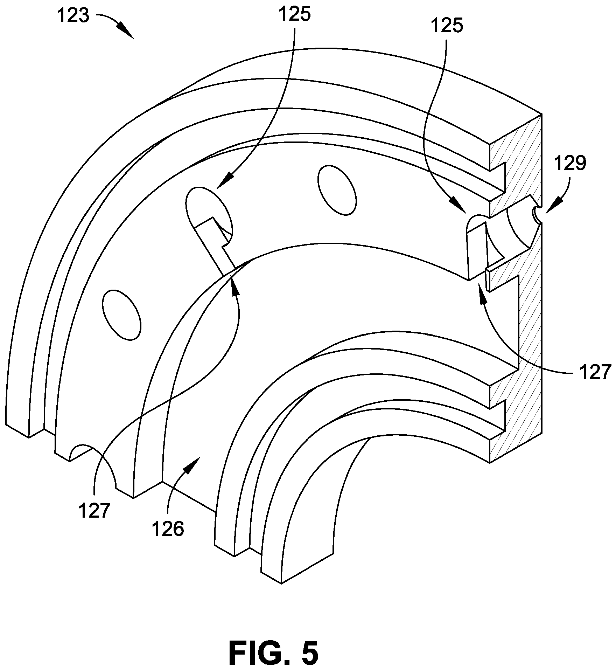

The first passage 115 is in fluid communication with a spray ring 123a that attaches to an interior housing surface 124 on a distal end of the motor housing 102. The spray ring 123a faces toward the inboard stator end coil 122a. Referring to FIG. 5, oil entering the spray ring 123a is distributed to multiple swirl chambers 125 by an annular distribution channel 126 and tangential oil feed slots 127. The tangential filling of the swirl chambers 125 creates conically shaped spray patterns 128 as the oil emerges from the nozzle orifices 129. The multiple nozzle orifices 129 are arranged in a circular pattern and spray the full stator end coil surface 122 to further cool the stator 117. The sprayed oil drips from the end coil 122 back into the oil sump 103. In embodiments, the spray ring 123a has at least one nozzle orifice 129. It should be understood that the spray patterns 128 may be shaped differently than in a conical shape, including but not limited to a flat fan shape, a solid jet stream, a full conical shape, a hollow conical shape, a mist, among others. The shape of the spray pattern is defined by the shape of the spray nozzle. Thus, it should be understood that the shape of the nozzle may vary in different embodiments depending on the desired shape of the spray pattern.

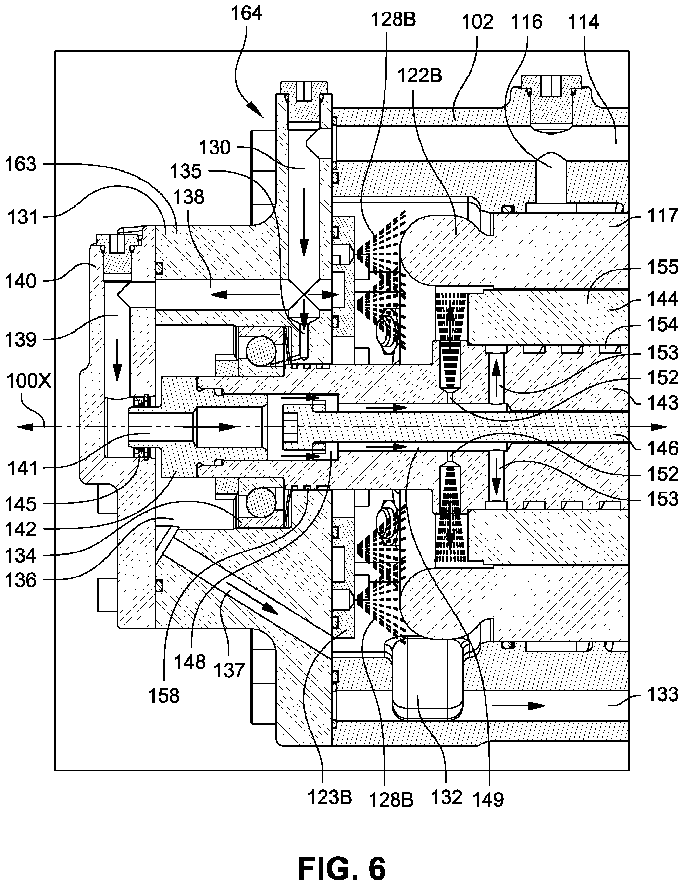

Referring to FIGS. 4 and 6, the oil flowing in axial channel 114 continues past the radial hole 116 and enters second passage 130 in a housing 163 of the bearing assembly 131. From second passage 130, oil may be distributed at least three different ways. First, an oil flow may be directed to a second spray ring 123b that attaches to the interior surface of the bearing assembly 131 surface and is sealed thereto. Operating as described above, the second spray ring 123b directs oil onto the outboard stator end coil 122b via at least one nozzle orifice 129 and delivered as multiple spray patterns 128b to reject waste heat from the outboard end of the stator 117. Oil then drips from the outboard end coil 122b and is collected in a pocket 132 formed (e.g., cast, machined, etc.) in the motor housing 102, where it flows back to the sump 103 via an axial drain conduit 133.

In embodiments, the oil may also be directed to an outboard motor bearing 134 of the bearing assembly 131 through an orifice 135 to lubricate the bearing 134. The oil then collects in a second pocket 136 formed (e.g., cast, machined, etc.) in the housing 163, where it drains back to the oil sump 103 through bearing drain conduit 137 and axial drain conduit 133.

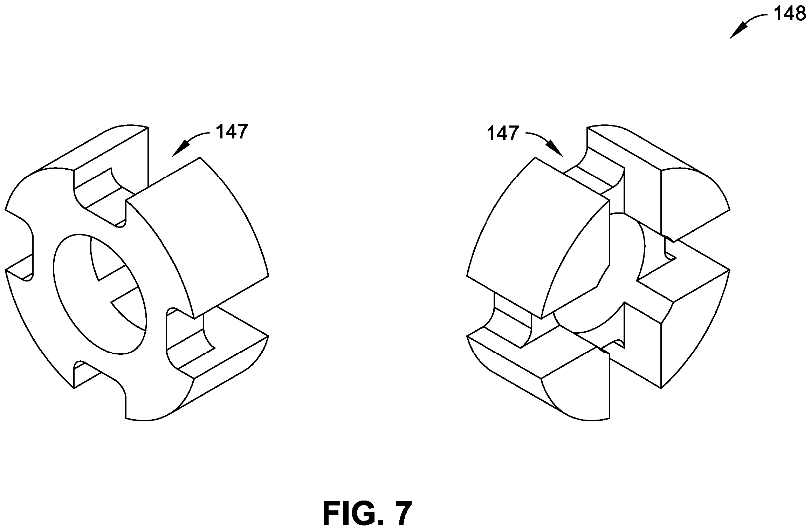

In embodiments, the second passage 130, may also be in fluid communication with an axial conduit 138 that extends generally parallel to rotor axis 100X toward a seal cover 140. Oil flows in the bearing assembly 131 through a passage 139 within the seal cover 140. Oil then enters a centerline conduit 141 defined in a shaft extension 142. In embodiments, the shaft extension 142 is threaded and sealed to the shaft 143 supporting the rotor 144. A radial contacting shaft seal 145 assembles into the cover and seals against the outside diameter of the shaft extension 142. Oil flows past the head of a shaft bolt 146, through flow-through passages 147 in a washer 148 (see FIG. 7), and then into an annular clearance region 149 surrounding the shaft bolt 146. The shaft bolt 146 is coupled to the compressor air end 101 drive shaft 150. In embodiments, the shaft bolt 146 is directly threaded to the drive shaft 150, creating a rigid fit between the two shafts in the taper region 151.

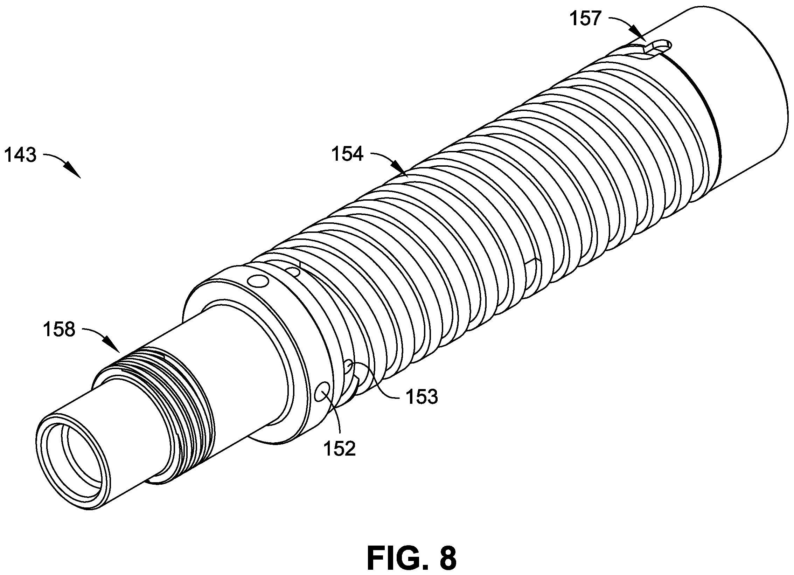

FIG. 8 illustrates an example rotor shaft 143 having at least one radially oriented orifice 152, radial holes 153, a rotor shaft helical channel 154, and at least one helical channel exit slot 157. The rotor shaft 143 may also include a wind-back seal thread 158 at the outboard end proximate to the bearing assembly 131 mounting surface. The wind-back seal thread 158 prevents oil injected from orifice 135 from bypassing the bearing assembly 131 and flowing towards the interior of the motor housing 102. Although the rotor shaft channel 154 is described as a helical channel in the example embodiments illustrated herein, it should be understood that the rotor shaft channel 154 may be axial, radial, circumferential, helical, or a combination thereof. The rotor shaft channel 154 is in direct contact with the inside surface of the rotor 144.

From the annular region 149, oil may be distributed by at least two different paths. Moreover, the oil may be distributed through only one of the paths or both paths at the same time. As shown, the rotor shaft 143 includes at least one radially oriented orifice 152. In the first path, oil may be metered through the radially oriented orifice 152, which sprays oil droplets onto the inner surface of the outboard end coil 122b by virtue of the centrifugal force imparted by rotation of the rotor shaft 143. The sprayed oil, after absorbing heat from the warm end coil, drips back to the oil pocket 132 and drains to the sump 103. In the second path, oil is fed through radial holes 153 into a rotor shaft helical channel 154 machined into the outer surface of the rotor shaft 143. Due to the tight seal created by the press fit between the rotor shaft 143 and the rotor 144, oil flows in the rotor shaft helical channel 154 from the outboard end of the rotor 144 along its length. The oil exits the rotor shaft helical channel 154 into helical channel exit slots 157 allowing the oil to spray radially outward onto the inner surface of the inboard stator coil end 122a, cooling this surface as well. The oil drips from the stator coil end 122a and drips back to the sump 103. The oil passing through the rotor shaft helical channel 154 absorbs waste heat from the rotor 144, for example, waste heat produced from eddy currents in the rotor steel and the permanent magnets 155 mounted in the rotor 144, cooling the rotor 144 and improving the motor assembly 100 efficiency. Extracting the rotor heat to improve motor efficiency ensures reasonable magnet operating temperatures for improved magnet durability.

Referring again to FIG. 4, oil may also return from the compressor air end 101 through drain hole 159 and path 160 after it has lubricated the air end bearings and cooled the rotor housing (not shown). This oil drains back to the sump 103, where it combines with the oil from the motor assembly 100. The oil within the sump 103 will normally be warmer than that the oil that was introduced in the main oil feed hole 111. Consequently, oil within the sump 103 may be pumped to an external heat exchanger to remove waste heat to either the ambient air or to a cold fluid source of a heat exchanger, such as that provided from a cooling tower (not shown). Once cooled, the oil is recirculated back into the motor assembly 100.

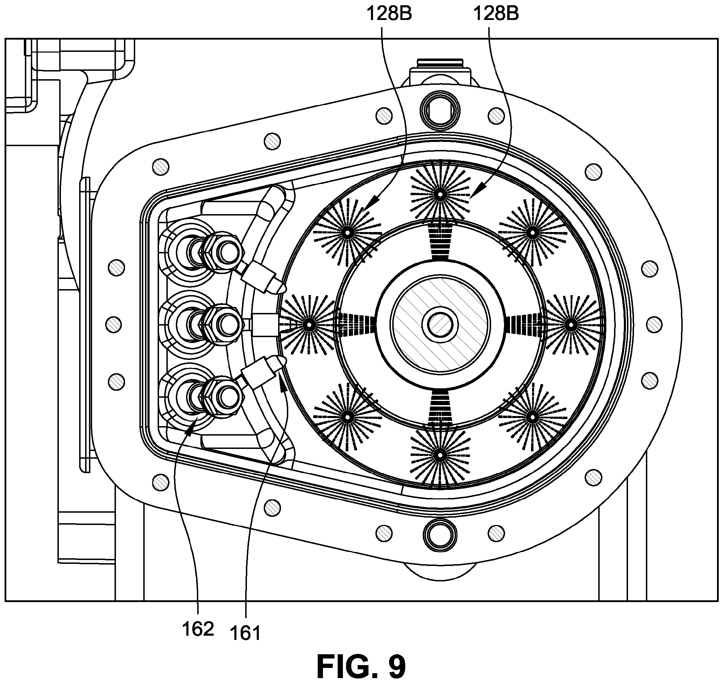

FIG. 9 illustrates the outboard end of the motor housing 102 with the bearing housing 163 and seal cover 140 removed to show the oil spray patterns 128 from spray ring 123b and rotor shaft orifices 152. In the embodiment shown, the spray ring orifices 129 are arranged in a circular pattern to evenly wet the outboard stator end coil 122b with oil. As discussed previously, in other embodiments, one or more of the arrangement of the orifices 129 or the shape of at least one of the spray patterns 128 may be modified to be different than the embodiment shown. The examples shown are not necessarily intended to be limiting examples of the arrangement of the orifices 129 or the shape of the spray pattern 128.

As also shown in FIG. 9, the motor leads 161 extend from the end coil and are connected to electrical terminals 162 to furnish electrical power to the stator 117. The electrical terminals 162 are threaded to the motor housing 102 and sealed with O-rings. In embodiments, a terminal box 182 may house the terminals 162 and provide a location for connections to the compressor package electrical system.

In the example embodiments described with reference to FIGS. 1 through 9, a common oil is used to both cool the motor assembly 100 and lubricate the bearings 145 of the motor assembly 100. In other embodiments, such as, for example, the embodiments now described with reference to FIGS. 10-13, the coolant used to cool the motor and the oil used to lubricate the bearings are two separate fluids. FIG. 10 illustrates an oil-free compressor air end 101 assembled to a bulkhead 104. In this embodiment, the motor housing 102 includes channels 165 and 166 formed (e.g., cast, machined, etc.) onto the top and bottom regions of the casting. Channels 165 and 166 carry lubricating oil toward and away from the outboard motor bearing 134. Channels 167 and 168 deliver a coolant, such as, but not limited to, a glycol solution, toward and away from the motor stator and rotor coolant passages. The motor coolant is brought to the motor housing 102 via an external inlet port 169 and exits at port 170.

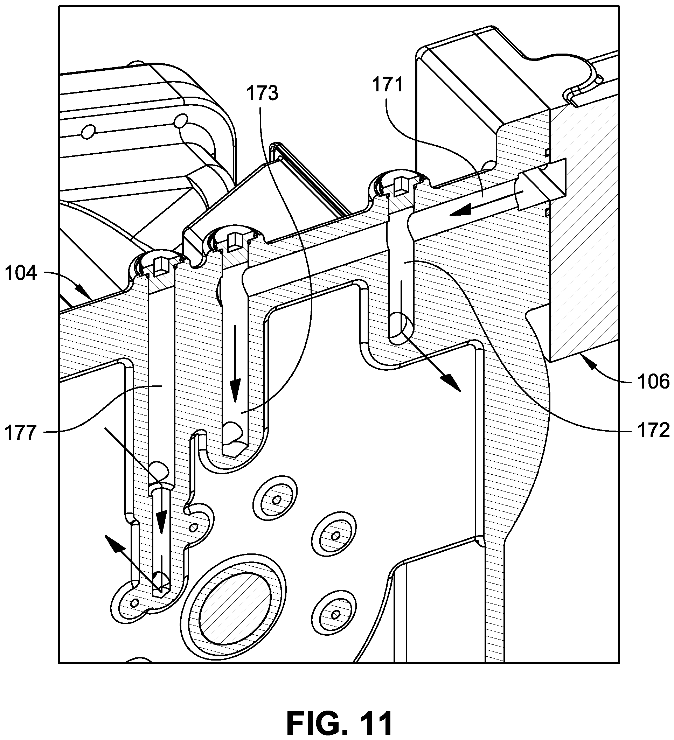

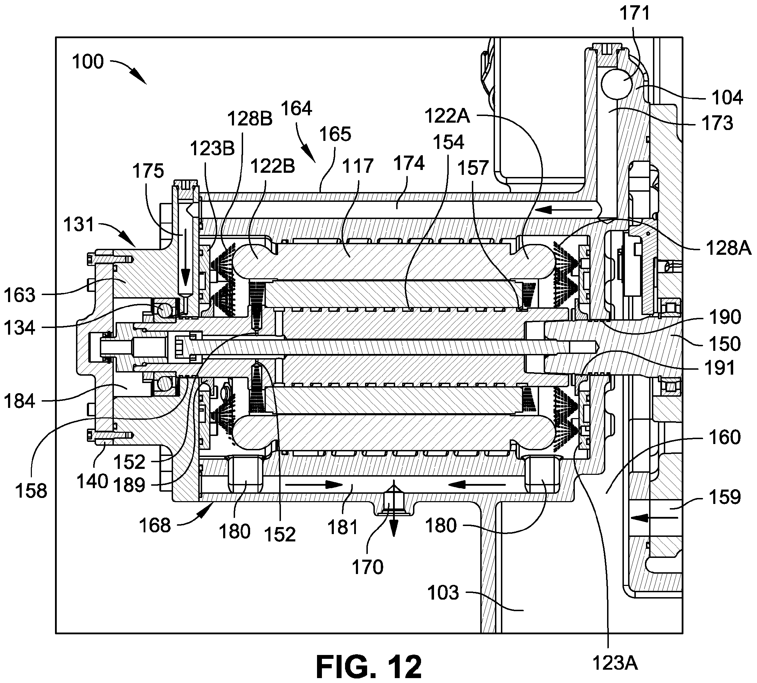

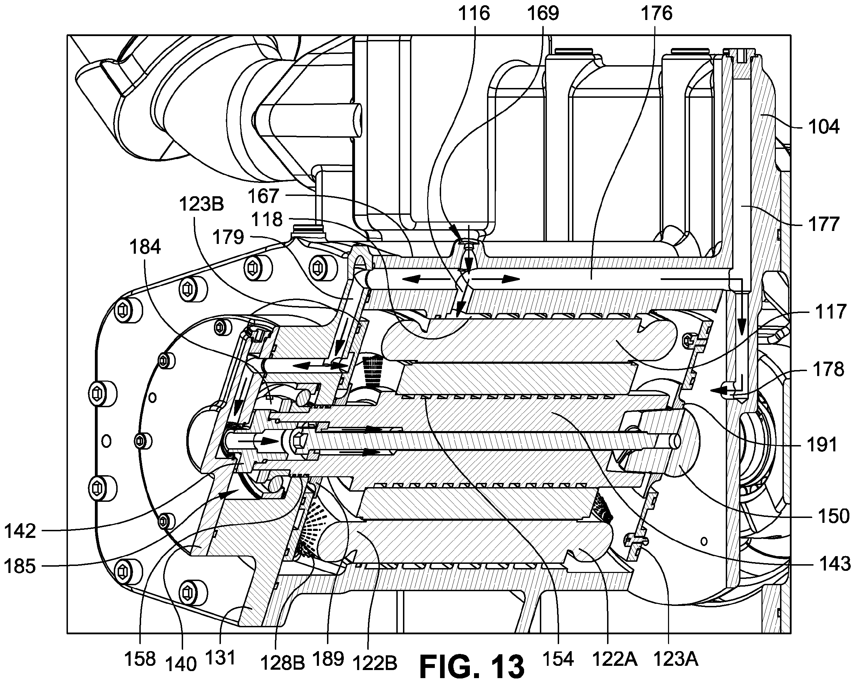

As shown in FIGS. 11 and 12, lubricating oil from the oil filter manifold 106 flows into a horizontal main oil feed hole 171, which divides into vertical oil passages 172 and 173. Passage 172 delivers lubricant to the bearings of the compressor air end 101. This oil is returned to the sump 103 via path 160 and through the compressor air end drain hole 159. Passage 173 delivers oil to the outboard motor bearing 134 through the intersecting horizontal hole 174 within channel 165. The oil flows from hole 174 into vertical hole 175 in the bearing assembly 131 for lubricating the outboard bearing 134. As shown in FIG. 13, oil exits the outboard bearing 134 into cavity 184 where it collects in a third pocket 185 formed (e.g., cast) in the motor housing 102 and then drains back to the oil sump 103 via a conduit 186 formed in the bearing housing 163 and motor housing channel 166 (FIG. 10).

FIGS. 12 and 13 illustrate internal cooling passages formed through the motor housing 102. In FIG. 13, the cross section runs through the motor centerline, intersecting the coolant supply channel 167 and inlet port 169. Coolant introduced at inlet port 169 can flow in at least three paths. In the first path, the coolant flows toward the bulkhead 104 of the motor housing 102 via a hole 176 that intersects vertical passage 177 (FIG. 13). Vertical passage 177 is in fluid communication with the spray ring 123a via connecting hole 178, where the coolant emerges as atomized conical spray patterns 128a to coat the inboard stator end coil 122a. It should be understood that the spray patterns may be shaped differently than in a conical shape, including but not limited to a flat fan shape, a solid jet stream, a full conical shape, a hollow conical shape, a mist, among others. The shape of the spray pattern is defined by the shape of the spray nozzle. It should be understood that the shape of the nozzle may vary in different embodiments depending on the desired shape of the spray.

In the second path, coolant flows into the motor housing helical channel 118 via conduit 116 (described above in the discussion of FIG. 4) to remove waste heat from the outer surface of the stator 117. Coolant exiting the motor housing helical channel 118 flows over the outside surface of the inboard end coil 122a. In the third path, coolant flows toward the bearing assembly 131 where the coolant enters radial passage 179. From the radial passage 179, coolant flows to the outboard spray ring 123b and to the seal cover 140 where the coolant enters the interior of the rotor shaft extension 142. Coolant entering the outboard spray ring 123b forms atomized spray patterns 128 and coats the outboard stator end coil 122b. Coolant entering the shaft extension 142 flows through shaft orifices 152, spraying the inside surface of the outboard stator end coil 122b. Coolant also flows into the rotor shaft helical channel 154 on the rotor shaft 143 to absorb and remove heat from the motor rotor 144. This coolant then exits at helical channel exit slots 157 to spray the inside surface of the inboard stator coil 122a.

Referring again to FIG. 12, coolant that drips from the stator end coils 122a and exits the helical channel exit slots 157 collects in drain pockets 180 formed (e.g., cast, machined, etc.) in the motor housing 102. This coolant flows through passage 181 in boss 168 and is removed to the outside of the motor housing 102 through port 170.

In embodiments, seals are provided to keep the lubricating oil and motor coolant fluids separate from each other within the motor housing 102. For example, FIG. 12 illustrates a wind-back seal thread 158 machined into the rotor shaft 143. When the shaft 143 rotates in the bearing housing 163 bore, oil is pumped back toward the bearing, preventing leakage into the motor housing cavity. Slinger-type seals 189 and 191 may be attached to the rotor shaft 143, adjacent to the spray ring 123b, and the compressor rotor shaft 150, adjacent to the inboard spray ring 123a, respectively. The rotating motion of the shafts 143 and 150 and slinger seals 189 and 191 centrifugally spins coolant away from the bearing housing and motor housing shaft bores, keeping the coolant contained within the motor housing 102. As shown in FIG. 12, a wind-back seal thread 190 is cut into the compressor rotor shaft 150 which, when rotated, pumps oil from the compressor air end 101 away from the interior of the motor housing 102.

In embodiments where the lubricating fluid and coolant are not a common liquid, the motor varnish system for this second cooling arrangement may be chemically compatible with the coolant that comes in contact with the motor components.

It should be appreciated that the above described individual cooling features can be used in various combinations and need not necessarily be used together in the cooling system 164. For example, in one embodiment, direct fluid cooling of the stator back iron may be combined with end coil spray cooling, without the fluid cooling of the rotor. Similarly, in other embodiments, the direct fluid cooling of the stator back iron can be combined with the rotor fluid cooling scheme, without direct spray cooling of the stator end coils. The described individual cooling features can be combined interchangeably, or combined in their entirety.

While the subject matter has been illustrated and described in detail in the drawings and foregoing description, the same is to be considered as illustrative and not restrictive in character, it being understood that only the preferred embodiments have been shown and described and that all changes and modifications that come within the spirit of the subject matters are desired to be protected. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

## Claims

1. A motor assembly comprising:
a housing having a first housing end, a second housing end, and a motor cavity defined between the first housing end and the second housing end, the housing defining a motor housing channel along an inner surface of the motor cavity;
a stator and a rotor disposed inside the housing, the stator having an exterior surface in contact with the motor housing channel; and
an axial channel disposed within the housing, the axial channel extending from the first housing end to the second housing end;
wherein the axial channel is in fluid communication with the motor housing channel, and the axial channel and the motor housing channel are configured to circulate a liquid around an outside surface of the stator.

2. The motor assembly of claim 1, wherein the motor housing channel is a helical channel around the outside surface of the stator.

3. The motor assembly of claim 1, wherein the axial channel is in fluid communication with a first passage and a second passage, the first passage proximate to the first housing end and the second passage proximate to the second housing end, the first passage and the second passage configured to deliver the liquid to an inboard stator coil end and an outboard stator coil end, respectively.

4. The motor assembly of claim 3, further comprising a first spray ring and a second spray ring coupled to respective outlets of the first passage and the second passage, the first and second spray rings having an annular oil distribution channel configured to receive the liquid from the first and second passages and spray the liquid around the inboard stator coil end and the outboard stator coil end, respectively.

5. The motor assembly of claim 3, wherein the rotor comprises a shaft bolt and a rotor shaft encasing the shaft bolt, the shaft bolt and the rotor shaft defining an annular clearance region along at least a portion of the shaft bolt and the rotor shaft, and the rotor shaft defining a rotor shaft channel along an outer surface of the rotor shaft.

6. The motor assembly of claim 5, wherein the rotor shaft channel is a helical channel extending along and around the outer surface of the rotor shaft.

7. The motor assembly of claim 5, wherein the second passage is in fluid communication with a centerline conduit, the centerline conduit partially extending along a rotor axis, the centerline conduit fluidly connecting the first passage with the rotor shaft channel through the annular clearance region.

8. The motor assembly of claim 6, wherein the rotor shaft includes a helical channel exit slot fluidly connecting the helical channel with an inner surface of the inboard stator coil end.

9. The motor assembly of claim 5, wherein the rotor shaft further includes a radially oriented orifice fluidly connecting the annular clearance region with an inner surface of the outboard stator coil end.

10. The motor assembly of claim 3, further comprising a bearing assembly configured to support the rotor, wherein the second passage is in fluid communication with the bearing assembly.

11. The motor assembly of claim 1, wherein a fluid circulating within the motor is a coolant fluid configured to cool the stator and rotor.

12. The motor assembly of claim 11, wherein the coolant fluid is a lubricant fluid configured to lubricate at least one bearing assembly of the motor assembly.
